# EUROPEAN PATENT SPECIFICATION

(11) **EP 1 888 938 B1**
(45) Date of publication and mention of the grant of the patent: **06.07.2011**
(21) Application number: 06747633.3
(22) Date of filing: 04.05.2006
(51) Int. Cl.: F16F 3/093, F16F 1/387

(54) **TUNEABLE BUSHING**
FEINEINSTELLBARE BUCHSE
BAGUE RÉGLABLE

(30) Priority: 09.06.2005 SE 0501337
(43) Date of publication of application: 20.02.2008
(73) Proprietor: Kongsberg Automotive AS, 3602 Kongsberg (NO)
(72) Inventor: BJØRKGÅRD, Sven, N-3610 Kongsberg (NO)
(74) Representative: UEXKÜLL & STOLBERG
(86) International application number: PCT/NO2006/000167
(87) International publication number: WO 2006/132535

(56) References cited:
- WO-A-03/062034
- DE-C1- 4 411 518
- GB-A- 532 393
- PATENT ABSTRACTS OF JAPAN vol. 007, no. 199 (M-240), 3 September 1983 (1983-09-03) & JP 58 097508 A (NISSAN JIDOSHA KK), 10 June 1983 (1983-06-10)
- PATENT ABSTRACTS OF JAPAN vol. 008, no. 076 (M-288), 9 April 1984 (1984-04-09) & JP 58 221039 A (NISSAN JIDOSHA KK), 22 December 1983 (1983-12-22)

## Description

The invention concerns a bushing arrangement to provide a connection between the drivers cab and an anti roll bar which is connected to the chassis of the vehicle.

The drivers cab is exposed to various forces, such as rolling of the vehicle, vibrations caused by unevennesses of the road and forces exerted onto the vehicle during to turning and breaking. The anti roll bar is provided with bushing arrangements to absorb vibrations and transfer forces. The elasticity of the bushing arrangement determines the absorption capacity of the bushing arrangement. A bushing arrangement displaying highly elastic properties fulfils the need for absorbing vibrations or displacements thereby providing a dampening of the cab, whilst a bushing arrangement displaying highly rigid properties provides a better contact with the road and a better feedback to the driver. Further the bushing arrangement may be provided soft in some directions of the vehicle and rigid in other directions of the vehicle.

WO 03/062034 and EP 525435 disclose bushing arrangements in accordance with prior art.

As the vehicle manufactures have various demands concerning the elasticity (more or less rigid/soft) of the bushing arrangements, a need has evoked to be able to provide various bushing arrangements each displaying an individual elastic property to be mounted in the specific type of vehicle.

To meet the demands of the vehicle manufacture, means being able to provide a large number of different kinds of bushing arrangements, each kind fulfilling the demand to the specific elasticity of the vehicle manufacture. The testing and manufacture of this large number of different kinds of bushing arrangements are time consuming and very costly to carry out.

It is an object of the invention to provide a solution which minimizes the time and money spent on manufacturing the bushing arrangements with different elasticity.

The object of the invention is achieved by providing a bushing arrangement wherein the elasticity of the individual bushing arrangement easily may be adapted to the specific platform system, market and manufacturer's demand.

The object of the invention is achieved by the invention as defined in the independent claim 1. Further embodiments of the invention are defined in the dependent claims.

In accordance with the invention the bushing arrangement is provided so that the elasticity of the bushing element may be varied with regards to displaying rigid or soft characteristics. This arrangement is carried out by introducing an additional elastic element and a stop arrangement in the bushing arrangement. The stop arrangement is adjustable to determine the portion of the displacement to be absorbed by the additional elastic element and the portion of the displacement to be transferred via the bushing arrangement.

In accordance with the invention a bushing arrangement is provided for the connection between drivers`cab and the chassis of the vehicle by a core and an anti roll bar. In accordance with prior art the core may be fixed to the drivers'cab and the anti roll bar to the chassis or vice versa. The core has an axial axis extending in the transverse direction of the vehicle. The anti roll bar comprises a torsion bar with an axial axis extending in the transverse direction of the vehicle and two link arms each with an longitudinal extension essentially in the longitudinal direction of the vehicle. Each link arm has a first end portion connected to the torsion bar and a second end portion connected to the core by a first bushing element. The first bushing element is a conventional bushing element and comprises a first rigid sleeve arranged concentric to the core at a radially outer position relative to the core. The first elastic element is positioned in the radial space between the first rigid sleeve and the core, and extends in the circumferential direction around the core. This conventional bushing element is provided with a second bushing element. The second bushing element is arranged concentric at a radially outer or inner position relative to the first bushing element. The second bushing element comprises a second rigid sleeve and at least a second elastic element wherein at least a portion of the radially inner surface of the second rigid sleeve is arranged in contact with the radially positioned outer surface of the second elastic element. The second elastic element has extensions in radial, axial and circumferential directions of the bushing arrangement. The second elastic element is more elastic than the first elastic element, preferably in a direction corresponding to the transverse direction of the vehicle (axial direction of the bushing arrangement). Preferably, the first elastic element displays a deforming capacity which defines the first elastic element as essentially rigid. The second elastic element being more elastic or soft than the first elastic element provides for the displacements, especially in the transverse direction, to be more easily absorbed by the second elastic element. The second elastic element may be fixed for instance by vulcanization to the radially inner surface of the second rigid sleeve and to the radially outer surface of the first rigid sleeve.

The second bushing element may be provided with at least one adjustable stop arrangement comprising one stop portion included in the second bushing element and provided to be brought into contact with a stop surface provided in the bushing arrangement at a distance away from the stop portion. Within a predetermined range of forces, this adjustable stop arrangement determines how much of the displacement to be absorbed by the second elastic element and how of much the displacement to be transferred via the bushing arrangement. The displacement is transferred via the bushing arrangement by the abutting contact between the stop portion and the stop surface. Thereby the size of the displacement to be transferred is determined by adjusting (increasing or decreasing) the distance between the stop surface and the stop portion.

The stop surface may be provided by a surface of the first rigid sleeve, the core or another element of the bushing arrangement displaying a certain rigidity. The stop portion has full or partial extension in the circumferential direction of the second rigid sleeve.

In accordance with a first embodiment of the invention adapted for dealing with the forces acting in the transverse direction of the vehicle, the stop portion is provided at the axial end portions of the second rigid sleeve. In a further embodiment the stop portion is arranged inclining inwards towards the axial axis of the core. The distance to the stop surface may be adjusted by using a suitable tool capable of deforming the stop portion plastically, thereby decreasing or increasing the distance. This adjustment might be carried out in various ways. For instance the tool might be used to alter the angel of inclination of the stop portion, or to apply a further inclination to the stop portion thereby obtaining a stop portion with two areas each with a different angle of inclination. Alternatively, the curved portion defining the inclination of the stop portion and indicating the starting point of the inclination may be moved in the transverse direction.

The second elastic element may have a full or partial circumferential extension, and preferably the circumferential extension is provided all along the inner circumference of the second rigid sleeve or along portions of the inner circumference of the second rigid sleeve. The bushing arrangement may be provided with plural preferably two second elastic elements each having extensions in radial, axial and circumferential direction, which circumferential extension is provided along portions of the inner circumference of the second rigid sleeve.

In accordance with a second embodiment of the invention the bushing arrangement is provided with a flexibility coinciding with the longitudinal direction of the vehicle. The bushing arrangement is adapted for absorbing forces acting in the longitudinal direction of the vehicle. In accordance with this second embodiment the second elastic element has a partial circumferential extension, and is provided along portions of the inner circumference of the second rigid sleeve. The second elastic element may comprise plural preferably two separated members each having extensions in radial, axial and circumferential direction, wherein each of the separated members is provided along portions of the inner circumference of the second rigid sleeve. The second elastic element is provided in positions coinciding with the vertical direction of the vehicle, for instance the two separate members are positioned at each side of the circumference along the vertical direction. The bushing arrangement in accordance with this second embodiment provides stiffness in the vertical direction and makes the bushing arrangement flexible in the longitudinal direction of the vehicle. The adjustable stop portion for determining the portion of displacement to be transferred and absorbed is provided by a portion of the inner surface of the second rigid sleeve. The distance to the stop surface is adjusted by varying the diameter of the second rigid sleeve by defomation and thus for instance reducing the distance. The stop portion may be provided locally or all along the outer surface of the second rigid sleeve in the transverse direction.

The stop portion and/or the stop surface may optionally be provided with an inner layer of elastic material to reduce dissonnance when the stop portion and the stop surface are abutting.

An example of a preferred embodiment of the invention is to be described in the following with reference to the figures where
Fig 1 shows the connection between the drivers'cab and the anti-roll bar using a bushing arrangement.
Fig 2 is a section along A-A in fig 1 of the bushing arrangement in accordance with a first embodiment of the invention.
Fig 3 is perspective view of the bushing arrangement.
Fig 4 is a section along B-B of the bushing arrangement in accordance with a second embodiment of the invention.
Fig 5 is a section along C-C of the bushing arrangement in accordance with a second embodiment of the invention.
Fig 6 is a section along D-D of the bushing arrangement in accordance with a second embodiment of the invention.
Fig 7 shows detail E in fig 5.

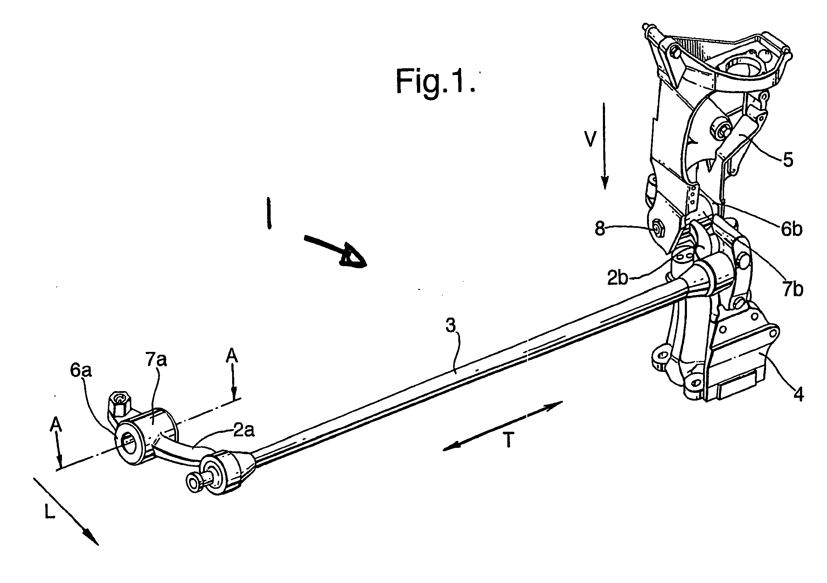

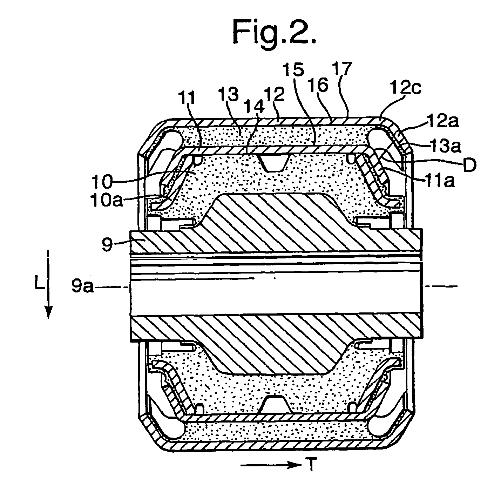

Fig 1 shows an anti-roll bar 1 which is constituted by a torsion rod 3 and two link arms 2a, 2b fixed at each end of the torsion rod 3. The two link arms 2a, 2b has an orientation such that the lengthwise direction of each of the link arms 2a, 2b extend in the longitudinal direction of the vehicle, illustrated by arrow L. The axial or longitudinal direction of torsion rod 3 is oriented in the transverse direction of the vehicle as illustrated by arrow T. The arrows L and T are also indicated in fig 2.

The vertical direction of the vehicle is illustrated by arrow V. The anti-roll bar 1 is connected to the chassis 4 of the vehicle by suitable connecting means at the areas of connection between the torsion rod 3 and each link arm 2a, 2b. (For illustrative purposes the connection to the chassis is only shown at arm link 2b). Further the resilient couplings between the drivers cab shown by structure 5 and the link arms 2a, 2b are illustrated at link arm 2b. Each of the bushing arrangements 6a, 6b are arranged in respective transverse bores 7a, 7b provided in each of the arm links 2a, 2b. The drivers cab 5 is joined to the link arms 2a, 2b by connecting the drivers cab 5 to each of the bushing arrangements 6a, 6b by suitable fixing means illustrated by component 8.

The cross-section of the bushing arrangement 6a in fig 2 is shown with the walls of the transverse bores 7a, 7b removed. A core 9 which provides the connection to drivers cab is positioned in the bushing arrangement with an axial axis such as the central axis 9a coinciding with the transverse direction T of the vehicle. The bushing arrangement comprises a first bushing element comprising a first elastic element 10 and a first rigid sleeve 11. The first elastic element 10 has annular cross section displayed in a plane defined by the longitudinal and vertical directions of the vehicle, further the elastic element 10 has a axial or a longitudinal extension in the transverse direction of the vehicle. The elastic element 10 is fitted onto the outer circumference of the core 9. The first elastic element 10 is provided with inner stiffening members 10a. The first rigid sleeve 11 which has an essentially cylindrical shape with a radially positioned inner axial surface 14 and a radially positioned outer axial surface 15, is arranged onto the first elastic element 10. The first rigid sleeve 11 is provided with axial end portions 11a oriented with an inwards inclination in the radial direction toward the central axis 9a of the core 9 all along the circumference of the first bush element. The first rigid sleeve 11 is mounted onto the first elastic element 10, by pressing the first rigid sleeve 11 onto the first elastic element 10 thereby compression the first elastic element 10.

The first elastic element 10 provided so that is able to absorb displacements due to stress applied to the bushing arrangement in the transverse, longitudinal and vertical direction of the vehicle. Preferably, the first elastic element shows a fairly stiff characteristic in the vertical direction and soft characteristics in transverse and longitudinal directions. Further a second bushing element is included in the brushing arrangement 6a.The second bushing element comprises a second elastic element 13 and a second rigid sleeve 12. The second rigid sleeve 12 is arranged radially spaced from the first rigid sleeve 11 and has a radially inner axial surface 16 and a radially outer axial surface 17. The second elastic element 13 is arranged in the space between the first and second rigid sleeve 11, 12. Alternatively the second bushing element may be arranged somewhere in between the first rigid sleeve 11 and the core 9, hence at a position radially closer to the central axis 9a of the core. In accordance with a first embodiment of the invention the second elastic element 13 fills up the space between the first and second rigid sleeve 11, 12 in the cirumferential direction of the bushing arrangement. By the introduction of the second elastic element 13 in the bushing arrangement a possibility for further absorption of displacement is provided and hence further dampening is achieved.

The second elastic element 13 may be fixated to the first and second rigid sleeve 11, 12 by vulcanization or by other fixation methods. The outer surface of the second rigid sleeve is placed into engagement with the inner wall of the transverse bore 7a, 7b, when the bushing arrangement is inserted into the bore. The second elastic element 13 is capable of absorbing displacements in transverse, longitudinal and vertical direction of the vehicle, and is arranged comparably more elastic than the first elastic element 10. The second elastic element 13 is more elastic in transversal or longitudinal directions than in the vertical direction. The second elastic element 13 might be characterized as stiff in the vertical direction and soft in transversal and longitudinal directions. Preferably the second elastic element 13 displays highly elastic features/is quite elastic in the transverse direction of the vehicle. The ability to absorb displacements in the transverse direction may be controlled by a stop arrangement comprising adjustable stop portions 12a provided at the axial end portions of the second rigid sleeve 12 and stop surfaces 11b. A distance D is defined between the stop portion 12a and a stop surface 11b, which stop surface 11b is defined as an area of the outer surface of the first rigid sleeve. When applying stress to the bushing arrangement in the transverse direction, the size of the distance D determines the portion of the lateral movement to be absorbed by the second elastic element 13. When the stop portion 12a and the stop surface 11b are placed into abutting contact further lateral displacement in is prohibited.

The stop portion 12a is shown with inwards inclination in the radial direction toward the central axis 9a of the core 9. By using a suitable tool the inclination angle of the stop portion 12a may be altered thereby reducing or increasing the distance D. Alternatively the distance D may be altered by moving the curved portion 12c(defining the inclination of the stop portion and indicating the starting point of the inclination) in the transverse direction. By this alteration the elasticity in the transverse direction may be adjusted to meet the need of the various customer in regards to dampening or driving response. Thus, by reducing the distance D, the rigidity of the bushing arrangement is achieved compared to increasing the distance D, which means providing a softer bushing arrangement capable of absorbing vibrations and forces/displacements exerted onto the bushing arrangement. The stop portion 12a may be provided with a layer 13a of elastic material to prevent dissonance when the stop portion 12a abuts against the stop surface 11b

The second elastic element 13 may be provided to fill the radial space between the first and second rigid element 11, 12 all around the circumference of the bushing arrangement. Alternatively the second elastic element 13 may be provided to fill the radial space between the first and second rigid element 11, 12 at certain areas to introduce additional stiffness or dampening to the bushing arrangement in these directions.

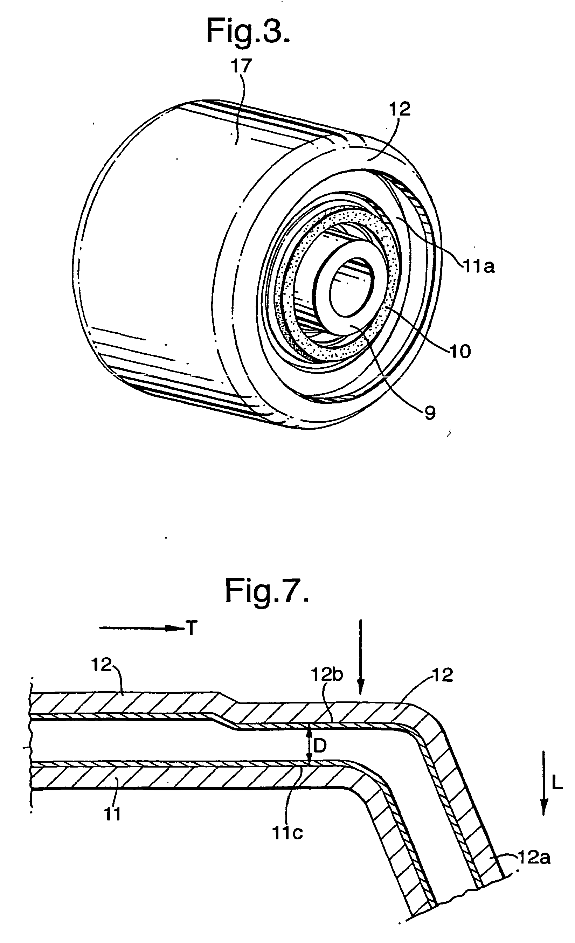

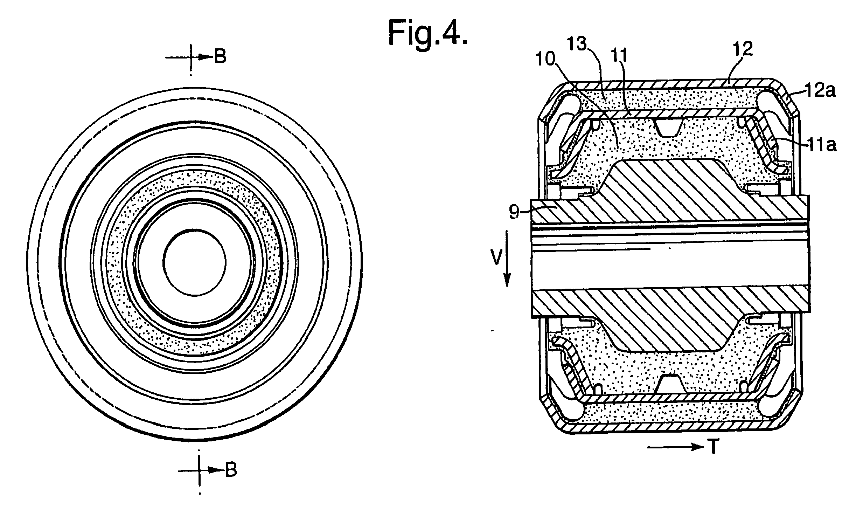

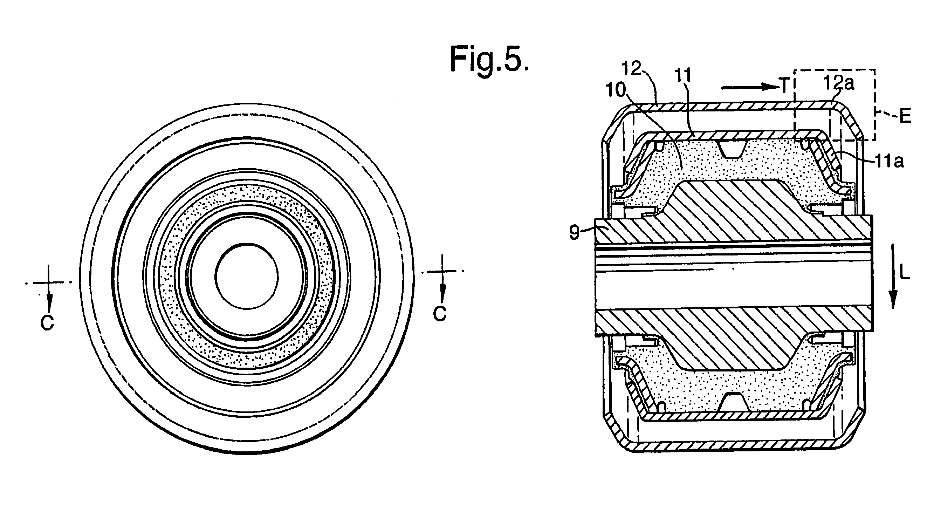

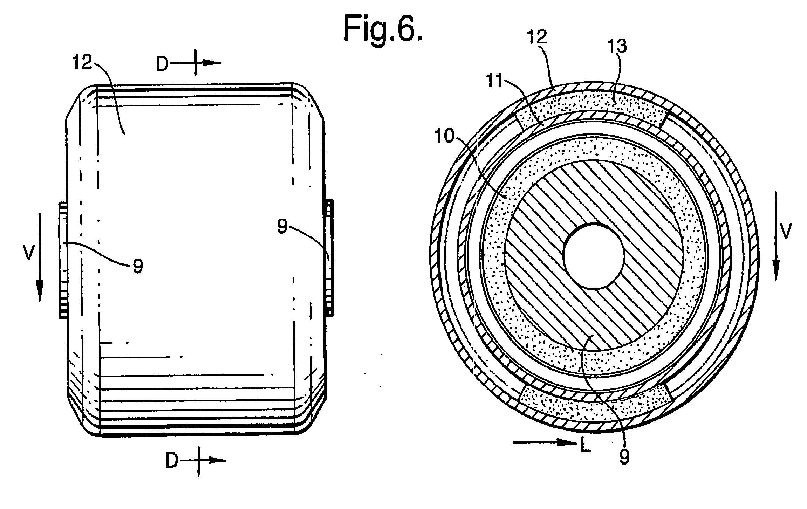

Figs 4-6 show an example of the second embodiment wherein the second elastic element 13 is provided to fill the radial space at portions of the circumference experiencing loading in the vertical direction. As seen in these figures the radial space between first and second rigid sleeve 11, 12 is empty in a direction essentially corresponding to a longitudinal loading direction. The bushing arrangement obtains stiffness in the vertical direction and is more flexible in the longitudinal direction of the vehicle. To be able to adjust the possible displacement in the longitudinal direction of the vehicle and thereby restricting the absorbing capacity in the longitudinal direction of the second elastic element 13, this second embodiment of the invention is provided with a stopping arrangement comprising an adjustable stop portion 12b and a stop surface 11c, see fig 7. The stop portion 12b is adjusted by deforming the diameter of the second rigid sleeve 12 locally as shown in fig 7 to obtain a distance D between the stop portion 12b and the stop surface 11c corresponding to restriction of the displacement between first and second rigid sleeve 11,12 as demanded. The deformation of the diameter of the second rigid sleeve 12 may be carried out locally or all along the second rigid sleeve 12 in the transverse direction of the vehicle. Further first and second rigid sleeves are provided with an elastic layer 13a to prevent dissonance when the outer surface of the first rigid sleeve 11 abuts against the and second rigid sleeve 12.

## Claims

1. A bushing arrangement (6a) for the connection between a drivers' cab and the chassis of the vehicle by the use of a core (9) and an anti roll bar (1), wherein an axial axis of core extends in the transverse direction of the vehicle and the anti roll bar comprises a torsion bar (3) with an axial axis extending in the transverse direction of the vehicle and two link arms each with an longitudinal extension essentially in the longitudinal direction of the vehicle, each link arm has a first end portion connected to the torsion bar and a second end portion connected to the core by a first bushing element comprising a first rigid sleeve (11) arranged concentric to the core at a radially outer position relative to the core and a first elastic element (10) positioned between the first rigid sleeve and the core, wherein
the bushing arrangement further includes a second bushing element arranged concentric at a radially outer or inner position relative to the first bushing element, wherein the second bushing element comprises a second rigid sleeve (12) and at least a second elastic element (13) wherein at least a portion of the radially inner surface (16) of the second rigid sleeve is arranged in contact with the radially outer surface of the second elastic element, and **characterized in that** the second elastic element is more elastic than the first elastic element, and the second bushing element is provided with at least one adjustable stop arrangement comprising one stop portion (12a) included in the second bushing element which stop portion is arranged to be brought into contact with a stop surface (11b) provided in the bushing arrangement at a distance away from the stop portion.

2. A bushing arrangement according to claim 1,
**characterized in that** the second elastic element is more elastic than the first elastic element in the transverse direction of the vehicle.

3. A bushing arrangement according to claim 1 or 2,
**characterized in that** the second elastic element has extensions in radial, axial and circumferential directions of the bushing arrangement, wherein the second elastic element may have a full or partial extension in the circumferential direction, preferably the circumferential extension is provided all along the inner circumference of the second rigid sleeve or along portions of the inner circumference of the second rigid sleeve.

4. A bushing arrangement according to one of the preceding claims,
**characterized in that** the stop arrangement is adjusted by adjusting the distance between the stop surface and the stop portion..

5. A bushing arrangement according to one of the preceding claims,
**characterized in that** the stop surface is provided by a surface of the first rigid sleeve, the core or another element of the bushing arrangement displaying a certain rigidity.

6. A bushing arrangement according to one of the preceding claims,
**characterized in that** the stop portion is provided at the axial end portions of the second rigid sleeve.

7. A bushing arrangement according to one of the preceding claims,
**characterized in that** the stop portion is arranged inclining inwards towards the axial axis of the core.

8. A bushing arrangement according to one of the preceding claims,
**characterized in that** stop portion has full or partial extension in the circumferential direction of the second rigid sleeve.

9. A bushing arrangement according to one of the preceding claims,
**characterized in that** the second elastic element is provided in positions coinciding with the vertical direction of the vehicle.

10. A bushing arrangement according to one of the preceding claims,
**characterized in that** the bushing arrangement is provided with preferably two second elastic elements each having extensions in radial, axial and circumferential direction, which circumferential extension is provided along portions of the inner circumference of the second rigid sleeve.

11. A bushing arrangement according to one of the preceding claims,
**characterized in that** the stop portion is provided by a portion of the inner surface of the second rigid sleeve, wherein the distance is adjusted by varying the diameter of the second rigid sleeve.

12. A bushing arrangement according to one of the preceding claims,
**characterized in that** the second elastic element is fixed to the radially inner surface of the second rigid sleeve and to the radially outer surface of the first rigid sleeve.

13. A bushing arrangement according to one of the preceding claims,
**characterized in that** the stop portion and/or the stop surface may optionally be provided with an inner layer of elastic material.

## Patentansprüche

1. Buchsenanordnung (6a) zur Verbindung zwischen einer Fahrerkabine und dem Chassis des Fahrzeugs durch Verwendung eines Kerns (9) und eines Stabilisators (1), wobei eine axiale Achse des Kerns in Querrichtung des Fahrzeugs verläuft und der Stabilisator eine Torsionsstange (3) aufweist, die eine in Querrichtung des Fahrzeugs verlaufende axiale Achse und zwei Verbindungsarme hat, welche jeweils eine Längserstreckung im Wesentlichen in der Längsrichtung des Fahrzeugs haben, wobei jeder Verbindungsarm einen ersten, mit der Torsionsstange verbundenen Endbereich und einen zweiten Endbereich hat, der mit dem Kern durch ein erstes Buchsenelement verbunden ist, das eine erste feste Hülse (11), die konzentrisch zu dem Kern an einer radial äußeren Position relativ zu dem Kern angeordnet ist, und ein erstes elastisches Element (10) aufweist, das zwischen der ersten festen Hülse und dem Kern angeordnet ist, wobei die Buchsenanordnung ein zweites Buchsenelement aufweist, das konzentrisch an einer radial äußeren oder inneren Position relativ zu dem ersten Buchsenelement angeordnet ist, wobei das zweite Buchsenelement eine zweite feste Hülse und wenigstens ein zweites elastisches Element (13) ausweist, wobei wenigstens ein Bereich der radial inneren Oberfläche (16) der zweiten festen Hülse in Kontakt mit der radial äußeren Oberfläche des zweiten elastischen Elements angeordnet ist, und **dadurch gekennzeichnet, dass** das zweite elastische Element elastischer als das erste elastische Element ist, und dass das zweite Buchsenelement mit wenigstens einer einstellbaren Anschlageinrichtung versehen ist, die ein in dem zweiten Buchenselement enthaltenes Anschlagteil enthält, wobei das Anschlagteil dazu angepasst ist, mit einer Anschlagoberfläche (11b) in Kontakt gebracht zu werden, die in der Buchsenanordnung auf Abstand zu dem Anschlagteil vorgesehen ist.

2. Buchsenanordnung nach Anspruch 1, **dadurch gekennzeichnet, dass** das zweite elastische Element in der Querrichtung des Fahrzeugs elastischer als das erste elastische Element ist.

3. Buchsenanordnung nach Anspruch 1 oder 2, **dadurch gekennzeichnet, dass** das zweite elastische Element Ausdehnungen in radialer, axialer Richtung und in Umfangsrichtung der Buchsenanordnung hat, wobei das zweite elastische Element eine volle oder teilweise Ausdehnung in Umfangsrichtung hat, wobei die Umfangsausdehnung vorzugsweise insgesamt entlang des inneren Umfangs der zweiten festen Hülse oder entlang von Teilen des inneren Umfangs der zweiten festen Hülse vorgesehen ist.

4. Buchsenanordnung nach einem der vorhergehenden Ansprüche, **dadurch gekennzeichnet, dass** die Anschlageinrichtung eingestellt wird, indem der Abstand zwischen der Anschlagoberfläche und dem Anschlagteil eingestellt wird.

5. Buchsenanordnung nach einem der vorhergehenden Ansprüche, **dadurch gekennzeichnet, dass** die Anschlagfläche durch eine Oberfläche der ersten festen Hülse bereitgestellt wird, wobei der Kern oder ein anderes Element der Buchsenanordnung eine gewisse Steifigkeit zeigt.

6. Buchensanordnung nach einem der vorhergehenden Ansprüche, **dadurch gekennzeichnet, dass** das Anschlagteil an den axialen Endbereichen der zweiten festen Hülse vorgesehen ist.

7. Buchsenanordnung nach einem der vorhergehenden Ansprüche, **dadurch gekennzeichnet, dass** das Anschlagteil nach innen geneigt auf die axiale Achse des Kerns zu angeordnet ist.

8. Buchsenanordnung nach einem der vorhergehenden Ansprüche, **dadurch gekennzeichnet, dass** das Anschlagteil eine volle oder teilweise Ausdehnung in der Umfangsrichtung der zweiten festen Hülse hat.

9. Buchsenanordnung nach einem der vorhergehenden Ansprüche, **dadurch gekennzeichnet, dass** das zweite elastische Element in Position vorgesehen ist, die mit der vertikalen Richtung des Fahrzeugs zusammenfallen.

10. Buchsenanordnung nach einem der vorhergehenden Ansprüche, **dadurch gekennzeichnet, dass** die Buchsenanordnung mit vorzugsweise zwei zweiten elastischen Elementen versehen ist, die jeweils Ausdehnungen in radialer, axialer Richtung und in Umfangsrichtung haben, wobei die Umfangsausdehnung entlang von Teilen des inneren Umfangs der zweiten festen Hülse vorgesehen ist.

11. Buchsenanordnung nach einem der vorhergehenden Ansprüche, **dadurch gekennzeichnet, dass** das Anschlagteil durch einen Teil der inneren Oberfläche der zweiten festen Hülse bereitgestellt wird, wobei der Abstand eingestellt wird, indem der Durchmesser der zweiten festen Hülse variiert wird.

12. Buchsenanordnung nach einem der vorhergehenden Ansprüche, **dadurch gekennzeichnet, dass** das zweite elastische Element an der radial inneren Oberfläche der zweiten festen Hülse und an der radial äußeren Oberfläche der ersten festen Hülse befestigt ist.

13. Buchsenanordnung nach einem der vorhergehenden Ansprüche, **dadurch gekennzeichnet, dass** das Anschlagteil und/oder die Anschlagoberfläche optional mit einer inneren Schicht aus elastischem Material versehen sein kann.

## Revendications

1. Agencement de bague (6a) pour la liaison entre une cabine de conduite et le châssis d'un véhicule par l'utilisation d'un moyeu (9) et une barre antiroulis (1), dans lequel un axe axial du moyeu s'étend dans la direction transverse du véhicule et la barre antiroulis comprend une barre de torsion (3) avec un axe axial s'étendant dans la direction transverse du véhicule et deux bras de liaison chacun avec une extension longitudinale principalement dans la direction longitudinale du véhicule, chaque bras de liaison a une première partie d'extrémité reliée à la barre de torsion et une seconde partie d'extrémité reliée au moyeu par un premier élément de bague comprenant un premier manchon rigide (11) agencé concentriquement avec le moyeu à une position radialement externe par rapport au moyeu et un premier élément élastique (10) positionné entre le premier manchon rigide et le moyeu, dans lequel l'agencement de bague inclut en outre un second élément de bague agencé concentriquement à une position radialement externe ou interne par rapport au premier élément de bague, dans lequel le second élément de bague comprend un second manchon rigide (12) et au moins un second élément élastique (13) dans lequel au moins une partie de la surface radialement interne (16) du second manchon rigide est agencée en contact avec la surface radialement externe du second élément élastique, et **caractérisé en ce que** le second élément élastique est plus élastique que le premier élément élastique, et le second élément de bague est prévu avec au moins un agencement de butée réglable comprenant une partie de butée (12a) inclut dans le second élément de bague, laquelle partie de butée est agencée pour être amenée en contact avec une surface de butée (11b) prévue dans l'agencement de bague à distance de la partie de butée.

2. Agencement de bague selon la revendication 1, **caractérisé en ce que** le second élément élastique est plus élastique que le premier élément élastique dans la direction transverse du véhicule.

3. Agencement de bague selon la revendication 1 ou 2, **caractérisé en ce que** le second élément élastique a des extensions dans des directions radiale, axiale et circonférentielle de l'agencement de bague, dans lequel le second élément élastique peut avoir une extension totale ou partielle dans la direction circonférentielle, l'extension circonférentielle est préférentiellement prévue tout le long de la circonférence interne du second manchon rigide ou le long des parties de la circonférence interne du second manchon rigide.

4. Agencement de bague selon l'une des revendications précédentes, **caractérisé en ce que** l'agencement de butée est réglé en ajustant la distance entre la surface de butée et la partie de butée.

5. Agencement de bague selon l'une des revendications précédentes, **caractérisé en ce que** la surface de butée est réalisée par une surface du premier manchon rigide, le moyeu ou un autre élément de l'agencement de bague ayant une certaine rigidité.

6. Agencement de bague selon l'une des revendications précédentes, **caractérisé en ce que** la partie de butée est réalisée aux parties d'extrémité axiale du second manchon rigide.

7. Agencement de bague selon l'une des revendications précédentes, **caractérisé en ce que** la partie de butée est agencée de manière à être inclinée vers l'intérieur en direction de l'axe axial du moyeu.

8. Agencement de bague selon l'une des revendications précédentes, **caractérisé en ce que** la partie de butée a une extension totale ou partielle dans la direction circonférentielle du second manchon rigide.

9. Agencement de bague selon l'une des revendications précédentes, **caractérisé en ce que** le second élément élastique est prévu en des positions coïncidant avec la direction verticale du véhicule.

10. Agencement de bague selon l'une des revendications précédentes, **caractérisé en ce que** l'agencement de bague est prévu préférentiellement avec deux seconds éléments élastiques ayant des extensions dans une direction radiale, axiale ou circonférentielle, laquelle extension circonférentielle est prévue le long de parties de la circonférence interne du second manchon rigide.

11. Agencement de bague selon l'une des revendications précédentes, **caractérisé en ce que** la partie de butée est réalisée par une partie de la surface interne du second manchon rigide, dans lequel la distance est réglée en faisant varier le diamètre du second manchon rigide.

12. Agencement de bague selon l'une des revendications précédentes, **caractérisé en ce que** le second élément élastique est fixé à la surface radialement interne du second manchon rigide et à la surface radialement externe du premier manchon rigide.

13. Agencement de bague selon l'une des revendications précédentes, **caractérisé en ce que** la partie de butée et/ou la surface de butée peuvent optionnellement être prévues avec une couche interne d'un matériau élastique.
